# EUROPEAN PATENT SPECIFICATION

(11) **EP 2 027 961 B1**
(45) Date of publication and mention of the grant of the patent: **11.12.2013**
(21) Application number: 08162845.5
(22) Date of filing: 22.08.2008
(51) Int. Cl.: B23H 7/10

(54) **Wire feed in wire-cut electrical discharge machine**
Drahteinführungsvorrichtung für einen elektrischen Drahterodiermaschine
Alimentation de câble dans une machine d'usinage par électroérosion par fil.

(30) Priority: 24.08.2007 JP 2007217771
(43) Date of publication of application: 25.02.2009
(73) Proprietor: SEIBU ELECTRIC & MACHINERY CO., LTD., Fukuoka-ken Fukuoka 811-3193 (JP)
(72) Inventor: WATANABE, Tsutomu, Fukuoka-ken, Fukuoka 811-3193 (JP); HASHIGUCHI, Toshiyuki, Fukuoka-ken Fukuoka 811-3193 (JP); FUKUZAKI, Yuji, Fukuoka-ken Fukuoka 811-3193 (JP); MITSUYASU, Takashi, Fukuoka-ken Fukuoka 811-3193 (JP); SHIOKAWA, Haruo, 3-1,Ekihigashi 3-chome,Koga-shi Fukuoka-ken 811-3193 (JP)
(74) Representative: Jenkins, Peter David

(56) References cited:
- EP-A1- 0 206 042
- EP-A2- 0 663 258
- JP-A- 7 276 145
- JP-A- 11 077 438
- JP-A- 2002 137 124
- JP-A- 2006 231 417
- US-A- 5 045 662

## Description

### FIELD OF THE INVENTION

The present invention relates to a method of automatically self-threading a wire electrode through an upper head, workpiece and a lower head successively in a wire-cut electrical discharge processor.

### BACKGROUND OF THE INVENTION

In conventional wire-cut electrical discharge processors, an upper head or upper guide is provided on a head of a machine tool and a lower head or lower head is mounted on a bottom arm of the machine tool. The upper head is to feed or thread a wire electrode into a workpiece, while the lower head is laid below and in opposition to the upper head to draw the wire electrode worn after electrical-discharge processing of the workpiece. The wire-cut electrical discharge processor also has a means to get the worn wire electrode advancing further ahead, which includes guide rollers lying further below the lower head, a wire-guide tube to lead the worn wire electrode out of the guide rollers, drawing rollers lying in close proximity to an outlet of the wire-guide tube to pull the worn wire electrode out. The prior automatic feeder for wire, moreover, has a source bobbin on which a wire electrode is wound, a turnaround roller to get the wire electrode made a turnabout in traveling direction in a wire-feed system in which the wire electrode is unwound and delivered out, a tension roller to apply a tensile force to the delivered wire electrode, and a braking roller to apply the brakes to the tensioned wire electrode to make sure of better delivery of the wire electrode. The wire electrode, after having traveled past the turnaround roller in the wire-feed system, moves through between paired wire-feed rollers of paired annealing rollers combined with paired common rollers, which are all installed on the head. The wire electrode during moving through between the paired wire-feed rollers constructed as stated earlier is annealed with an electric current applied through a feeder element from a power supply and then transferred to the upper head. Between the annealing rollers and the common rollers, there is provided a cutter to get the tip of the wire electrode straight or to cut right the snapped end of the wire electrode after the breakage down of the wire electrode. The wire electrode, after having moved past the upper head, is applied with a processing potential difference across the wire electrode and the workpiece to process the workpiece and then the wire electrode worn owing to metal erosion occurring in spark discharges is delivered to the lower head lying below and in opposition to the upper head. Then, the worn wire electrode is transferred to the wire-guide tube via the guide rollers. The worn wire electrode, moreover, is pulled out by the drawing rollers lying downstream of the wire-guide tube and successively forced into a waste hopper by means of any suction means farther downstream of the drawing rollers.

A method of threading a wire electrode into a wire-cut electrical discharge processor is disclosed in, for example Japanese Laid-Open Patent Application No. H09-108 950, which detects and discriminates in perspective between an inconvenient phase the upper guide at the beginning of machining disables the wire electrode from passing through there and another phase the wire electrode is allowed to pass through the upper guide, and further gets rid of the inconvenient phase if detected, making sure of the certain threading of the wire electrode into the upper guide. With the prior method of threading the wire electrode as stated earlier, a sensor to detect whether there is any buckling or bending in the wire electrode is made between the rollers to deliver the wire electrode and an entrance of the wire electrode-guide tube. No detection of buckling encourages the wire electrode to unwind so long as to reach a catch/pull means to recover the wire electrode. On the other hand, when any buckling is detected in the wire electrode, the rollers get stopped and a preselected pattern of relative movement between the wire-electrode guide and the workpiece is tried repeatedly over the preselected number of times to search a hole extending in alignment throughout across both the wire-electrode guide and the workpiece to get rid of buckling. Once the buckling has been eliminated, the rollers start to feed the wire electrode again. If the buckling remains intact, the wire electrode is rewound back to try anew getting the wire electrode threading over desired numbers of times.

Another method of threading a wire electrode is disclosed in, for example Japanese Laid-Open Patent Application No. 2006-231 417, in which a wire electrode , even if caught anywhere, can be threaded securely into a hole in a workpiece for a short time without rewound back to any desired extent. With the prior threading method of the wire electrode as recited earlier, the buckled wire electrode is held loose between delivery rollers and a guide tube and further raised slightly with a jet stream being forced into the guide tube. An eccentric roller is actuated repeatedly to cooperate with a follower roller to get the wire electrode free of buckling. Then, the wire electrode is unwound together with the jet stream.

An automatic wire-feed method is disclosed in, for example in Japanese Laid-Open Patent Application No. H02-145 215, in which a wire electrode at the supply side is subjected to annealing to get elongation. With the prior automatic wire-feed method as stated just above, as a result that the wire electrode is annealed at the supply side with an electric current applied through a feeder pin to get elongated, actuation of wire-feed rollers after a supply tube for the wire has been lowered to an upper head makes it possible to let the wire electrode thread through a cutting kerf of a cut shape in the workpiece at a location where the wire electrode wire has snapped off. Moreover, the wire electrode elongated straight, no matter how small the cut slit or cut hole, is allowed to pass securely and quickly through the cut hole. With this prior automatic wire-feed method, moreover, after an exit of the of the upper head has slightly retreated from the location of wire breakage along a cutting path, the wire-feed rollers is driven as stated earlier to get the wire electrode passing through the cutting kerf of the cut shape in the workpiece at the location of breakage. Thus, the tip of the wire electrode is allowed to thread smoothly through the cut kerf or cut hole without encountering any interference with the workpiece around the location of wire breakage. It is disclosed that this prior art has proved high success rate in the resume of wire feed and the connection of wires.

With the conventional wire-cut electrical discharge processor, meanwhile, as abutment or contact of the wire electrode against any one of the upper head, workpiece and the lower head is detected, the wire-feed rollers are stopped and the extremity of the wire electrode is cut off over a preselected length to be removed. The automatic threading of the wire electrode with renewed tip is reopened after repetition of trouble some predetermined procedure pattern to search the hole allowing the threading of the wire electrode. The prior wire-cut electrical discharge processor still needs plenty of time to reopen the automatic wire threading after abutment of the wire tip against any one of the upper head, workpiece and the lower head has been detected. Thus, the prior wire-cut electrical discharge processor has a major problem in which it costs more time to automatic connection of wire electrodes for the automatic feed of the wire electrode as the number of try to reopen the automatic threading of the wire electrode increases.

JP 11-077438 discloses an automatic inserting method during which a wire electrode is fed out at a high speed by a feed roller and tension of the wire electrode is detected by a tension detection means. When the tension exceeds a prescribed decision reference value, completion of automatic insertion is judged and a servo feed motor is switched so as to tension control the wire electrode.

### SUMMARY OF THE INVENTION

The present invention, therefore, has as its primary object to overcome the problem as described just above and to provide a method of threading a wire electrode in a wire-cut electrical discharge processor, which cuts the time needed before repeated tries to reopen an automatic self-threading of a wire electrode thereby shortening hours to resume the automatic feed of the wire electrode. More particular, the present invention provides a method of threading a wire electrode in a wire-cut electrical discharge processor, the method being as defined in claim 1.

Optionally, when the wire electrode couldn't still manage to get rid of the abutment against the obstacle after the automatic threading of the wire electrode with the new extremity have been carried out over a preselected times, the automatic threading of the wire electrode gets stopped and then an alarm issues. Further optionally, the alarm is transmitted from a computer in the wire-cut electrical discharge processor to a personal computer and/or a cell phone.

The wire-threading method of the present invention has proved still effective in some conditions awkward in the automatic threading of the wire electrode, for example there is, albeit slightly, a little misalignment in start holes or kerfs, or there is any relative discrepancy between the extremity of the wire electrode and the cutting path or kerf owing to roll-bent in the wire electrode, or there is any foreign matter to clog up the hole or cutting kerf.

### BRIEF DESCRIPTION OF THE DRAWINGS

FIG. 1 is a schematic view illustrating a preferred embodiment of a wire-cut electric discharge processor operated according to a wire-threading method of the present invention, a guide tube being shown held at elevated location thereof:
FIG. 2 is an enlarged view illustrating a major part of the wire-cut electric discharge processor of FIG. 1:
FIG. 3 is a view illustrating the wire-cut electric discharge processor in which the guide tube is shown held at lowered location thereof:
FIG. 4 is an enlarged view illustrating a major part of the wire-cut electric discharge processor of FIG. 3:
FIG. 5 comprising FIG. 5-1 and FIG. 5-2 and is a flowchart describing the operation of a preferred embodiment of a wire-threading method in the wire-cut electric discharge processor of the present invention, in which a wire electrode is subjected to annealing: and
FIG. 6 comprising FIG. 6-1 and FIG. 6-2 and is a flowchart describing the operation of a wire-threading method in the wire-cut electric discharge processor not according the present invention, in which a wire electrode is subjected to no annealing.

### DETAILED DESCRIPTION OF THE PREFERRED EMBODIMENTS

The wire-threading method of the present invention is befitted to use in a wire-cut electric discharge processor in which a workpiece is worked by spark discharge energy occurring when the processing potential is applied across a wire electrode and the workpiece.

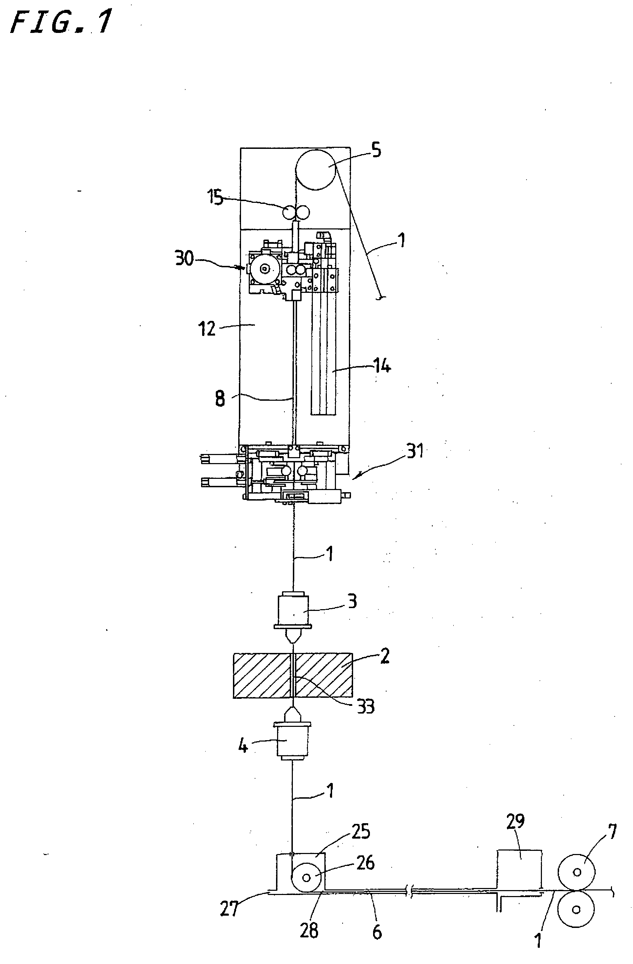

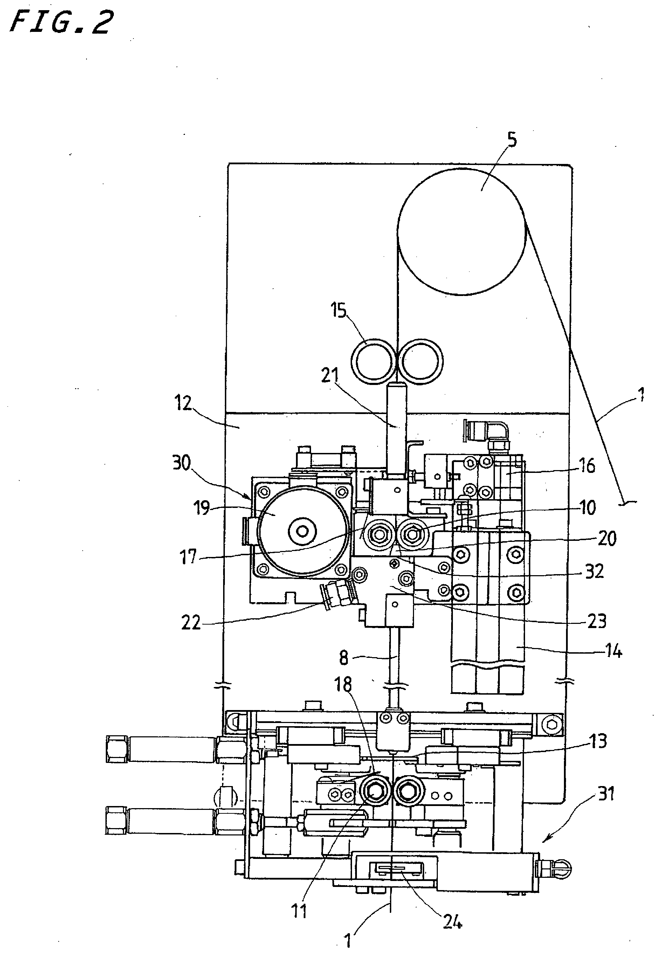

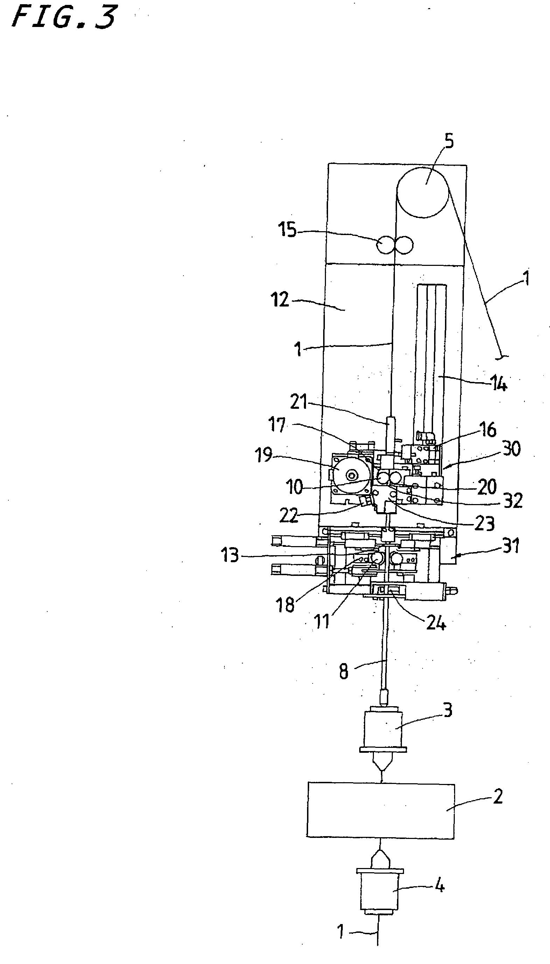

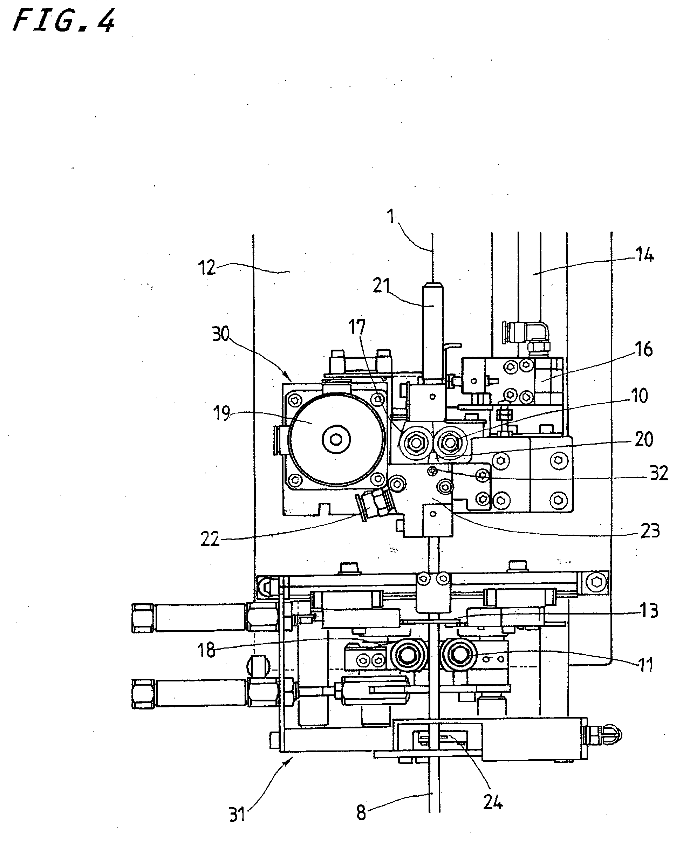

A preferred embodiment of the wire-threading method of the present invention in the wire-cut electric discharge processor will be hereinafter described with reference to FIGS. 1 to 4. The wire-threading method of the present invention is most adapted for the wire-cut electric discharge processor, which includes an upper guide or head 3 to receive a wire electrode 1 unwound from a source bobbin (not shown) and moving past a guide roller 5 and brake rollers 15, a workpiece 2 lying below the upper head 3, a lower guide or head 4 lying further below the workpiece 2 in opposition to the upper head 3 to receive the wire electrode worn in the course of processing the workpiece 2, electric feeder elements 17 and 18 for feeder brushes supplied with a discharge current from a processing potential source (not shown) to apply a processing potential across the wire electrode 1 and the workpiece 2, and an electrically-isolated waste hopper (not shown) to receive the worn wire electrode pulled out of the lower head 4. The electric feeder elements 17 and 18 are installed on a wire-electrode feed unit 30 and a wire-electrode cutting unit 31 on a processor head 12, one to each unit. The wire electrode 1 in a wire-supply system of the wire electric discharge processor has to be insulated from a processor head 12, a floor and the like. To this end, the processor head 12, floor and the like are made of an insulating material including, for example synthetic resins and so on.

The wire-electrode feed unit 30 is constructed to make vertical movement along a guide rail (not shown) by the operation of a driving cylinder 14 mounted on the processor head 12. The wire-electrode feed unit 30 includes a pair of wire-electrode feed rollers 10 allowed to open and close to catch the wire electrode 1 between them while feeding the wire electrode 1, a driving motor 19 to actuate the wire-electrode feed rollers 10, a wire-guide support 21 to assist the threading of the wire electrode 1, a guide-tube holder 23 to support a guide tube 8, an air inlet 22 to blow air into the guide tube 8, the electric feeder element 17 to constitute the feeder brush to feed the wire-electrode feed rollers 10 with electricity, an actuating cylinder 16 to energize the wire-electrode feed rollers 10 to get closed and opened to hold and release the wire electrode 1, and a sensor 20 installed on an upper end 32 of the guide-tube holder 23 to sense an abutment or collision of a tip of the wire electrode against something else. Especially, the sensor 20 is installed to the upper end 32 of the guide-tube holder 23 that is below the wire-electrode feed rollers 10 to keep the guide tube 8 in place. The sensor 20 is designed to detect any warp or bent that would occur in the wire electrode 1 when the extremity of the wire electrode 1 comes into abutment or collision against any obstacle including the upper head 3, workpiece 2 and the lower head 4. The wire-electrode cutting unit 31 is secured to a bottom of the processor head 12 to allow the guide tube 8 to move in and out the wire-electrode cutting unit 31 as the wire-electrode feed unit 30 travels vertically. The wire-electrode cutting unit 31 has a pair of common rollers 11 allowed to close and open to hold the wire electrode 1 between them, a cutter 13 lying above the common rollers 11, the electric feeder element 18 feeding the common rollers 11 with electricity, and a sensor 24 made at the bottom of the wire-electrode cutting unit 31 to detect the extremity of the wire electrode 1.

With the wire-cut electrical discharge processor constructed as stated earlier, the wire electrode 1 after having moved past the guide tube 8, as the wire-feed rollers revolves at a low rotating speed, first feeds into the upper head 3, further traveling from the upper head 3 into the workpiece 2 and then enters the lower head 4. After the wire electrode 1 has passed across the lower head 4, the wire-electrode feed rollers 10 are shift up to a high-speed revolution. The wire electrode 1 pulled out of the lower head 4 is led in turn through a turnaround roller 26 in a turnaround station 26, a fluid-jet guide tube 6, a water separator 29 located at an outlet of the fluid-jet guide tube 6, and winding rollers 7 to pull the wire electrode 1 out. The wire electrode 1 pulled out from the winding rollers 7 is finally recovered into a waste hopper. The turnaround station 5 has a fluid-jet ingress 27 to trap a fluid of water forced from a pump or the like in preparation for delivery of the water into the fluid-jet guide tube 6, and an egress 28 to send a jet stream of the water trapped through the fluid-jet ingress 27 into the fluid-jet guide tube 6.

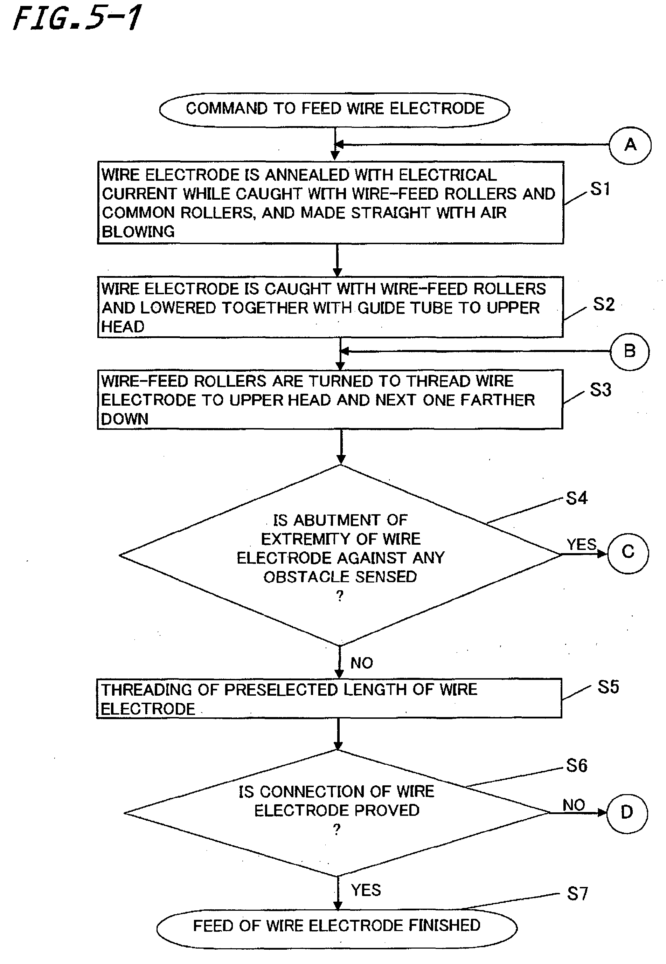

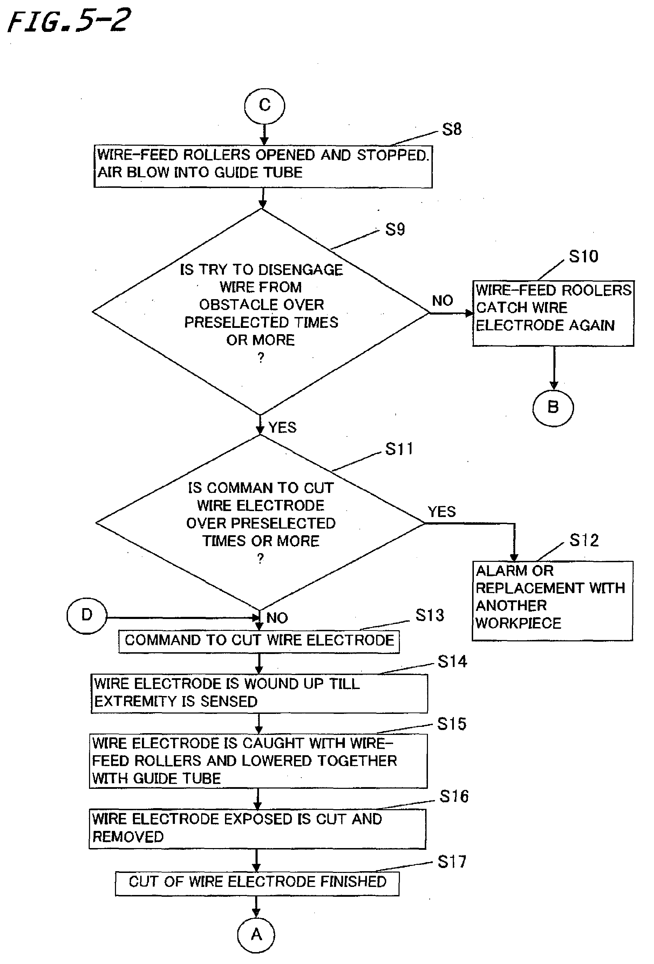

The wire-threading method of the present invention features an automatic self-threading method of the wire electrode 1. In the process in which the wire electrode 1 is passed successively through a hole in the upper head 3, a start hole or kerf 33 cut in the workpiece 2 and a hole in the lower head 4, the foremost edge of the wire electrode 1 sometimes comes into abutment or collision against any one of the upper head 3, workpiece 2 and the lower head 4, failing to pass through across all the parts as stated just above. With the abutment of the wire electrode 1 against any of the parts as stated just above, the wire electrode 1 gets buckled or bent to come into contact with the upper end 32 of the guide-tube holder 23 between the driven wire-electrode feed rollers 10 and the upper end 32 of the guide-tube holder 23. This contact of the wire electrode 1 with the upper end 32 makes the wire-feed rollers 10 release the wire electrode 1 to get the wire-feed rollers 10 ceasing feeding the wire electrode 1. The potential across the wire-feed rollers 10 and the wire electrode 1 is kept at a preselected difference or almost equal or, if any, only slight difference. Contact of the buckled wire electrode 1 with the upper end 32 of the guide-tube holder 23 causes any variation in the preselected potential difference, that is, generates any potential difference between the wire electrode 1 and the upper end 32 or a bit of variation in the slight potential difference. The contact of the buckled wire electrode 1 with the upper end 32 or the collision of the wire electrode 1 against any obstacle can be detected as a result of the variation in the potential across the wire-feed rollers 10 and the wire electrode 1. As the wire electrode 1 is released from the wire-feed rollers 10, the foremost edge of the buckled wire electrode 1 can get rid of a stranded condition on either of the workpiece 2 and the lower head 4. Soon after the wire-feed rollers 10 move away from one another, the wire electrode 1 is allowed to move back upwards owing to a resilient action occurring in the buckled wire electrode, thereby getting the foremost edge of the wire electrode 1 separated from the obstacle. After the wire electrode 1 has rid of the abutment against any one of the upper head 3, workpiece 2 and the lower head 4, air is blown into the guide tube from top to bottom. Then, the wire-feed rollers 10, soon after urged to close to each other to hold the wire electrode 1 between them, are actuated to start again the automatic threading of the wire electrode 1. A version of a wire electrode-feed operation in which the wire electrode 1 is annealed will be explained later with reference to a flowchart in FIG. 5 (FIG. 5-1 and FIG. 5-2) regarding the wire-threading method of the present invention in the wire-cut electrical discharge processor.

With the wire electrical discharge processor constructed as stated earlier, operation begins with a command to unwind the wire electrode 1 from the source bobbin. In step S1, actuation of the cylinder 16 makes the wire-feed rollers 10 open and close to hold the wire electrode 1 between them 10, while another cylinder is actuated to operate the common rollers 11 to catch the wire electrode 1 between them. The wire electrode 1 is annealed with electric power applied thereto while traveling through the guide tube 8 lying between the wire-feed rollers 10 and the common rollers 11. On annealing of the wire electrode 1, the wire-feed rollers 10 gets driven in a revolving direction opposite to a traveling direction of the wire electrode 1 to anneal the wire electrode 1 under the application of a tensile force. After annealing, the wire electrode 1 is cooled with an air flow blown into the guide tube 8 via the air inlet 22 thereof. A quantity of electric current and a period of time for the annealing operation of the wire electrode 1 and a period of bowling air are properly selected for the purpose of relief of permanent curl on the wire electrode 1 and ensuring straightness of the wire electrode 1. Especially, the quantity of electric current, period of time and the quantity of bowling air are set depending on a diameter of the wire electrode 1. The annealing and air blow to the wire electrode 1 are carried out for the preselected number of times, for example 2 times. On annealing of the wire electrode 1, the electric power is supplied to the wire-feed rollers 10 via the electric feeder element 17 while to common rollers 11 via the electric feeder element 18 (step S1).

Then, the cylinder 16 is actuated to get the wire-feed rollers 10 closed to catch the wire electrode 1 between them. The wire electrode 1 is moved downward together with the guide tube 8 to the upper head 3 while kept caught by the wire-feed rollers 10 (step S2). The wire-feed rollers 10 are driven at a low revolving speed to feed or lead the wire electrode 1 from the upper head 3 through the start hole or kerf 33 cut in the workpiece 2 to the lower head 4 (step S3). In the treating process as stated just earlier in which the wire electrode 1 is passed successively through the upper head 3, workpiece 2 and the lower head 4, the foremost edge or extremity of the wire electrode 1 sometimes comes into abutment or collision against any obstacle including the upper head 3, workpiece 2 and the lower head 4, getting buckled or warped. Thereupon, the sensor 20 detects the buckled condition of the wire electrode 1 in which the extremity of the wire electrode 1 gets stranded on the obstacle. The buckling or warp of the wire electrode 1 is detected by just contact of the buckled wire electrode 1 with the sensor 20 as a result of variation in the potential across the wire-feed rollers 10 and the upper end 32 of the guide-tube holder 23 or the sensor (20). The wire electrode 1 is applied with the potential through wire-feed rollers 10, which is electrically connected with the electric feeder element 17 while closed to catch the wire electrode 1 between them. Thus, the sensor 20 serves to detect the stranded condition of the wire electrode 1 in which the extremity of the wire electrode 1 gets abutted or collided against the obstacle (step S4).

At step S4, no detection of the buckled wire electrode 1 at the sensor 20 ensures that the wire electrode 1 is allowed to extend in good order through the upper head 3 and the start hole in the workpiece 2 to the lower head 4. The wire-feed rollers 10 are operated to pull out the wire electrode 1 over a preselected length with catching the wire electrode 1 between them, thereby getting the wire electrode 1 delivered into the fluid-jet guide tube 6 through the turnaround roller 25 in the turnaround station 25 (step S5). The wire electrode 1 moves past the water separator 29 to the winding rollers 7. Whereas the wire-feed rollers 10 gets opened to release the wire electrode 1, the winding rollers 7 catch the wire electrode 1, which is from then on pulled out by the winding rollers 7. If the wire electrode 1 is fed normally in preset working condition into the wire-cut electrical discharge processor, the wire electrode 1 is confirmed to be connected under the application of tensile force (step S6). On the other hand, when the wire electrode 1 at step S6 is confirmed not to be fed past the upper head 3, workpiece 3 and the lower head 4 into the winding rollers 7, the operation advances to step S6 to cut the wire electrode 1. As opposed to the above, after the wire electrode 1 is allowed to feed into the processor over a preselected length and as a result confirmed to be connected, the wire-feed rollers 10 are shift up to a high revolving speed to feed or lead the wire electrode 1 to the winding rollers 7. The feed or threading operation of the wire electrode 1 finishes at this point (step S7). The wire-cut electrical discharge processor then works as usual to cut the workpiece 2 by spark discharges occurring between the workpiece 2 and the wire electrode 1.

With the wire-cut electric discharge processors, the clearance between the wire electrode 1 and any holes of the upper head 3, workpiece 2 and the lower head 4 is very critical in diameter and, therefore, the threading of the wire electrode 1 is usually affected by even minute obstacle. To be certain of stepping away from the odds that collision or abutment of the extremity of the wire electrode 1 against any obstacle gets the wire electrode 1 buckled or bent and stranded on the obstacle, the wire electrode 1 is fed at a low velocity while threading through across the range from the upper head 2 to the lower head 4 to make sure of smooth travel of the wire electrode 1. The traveling velocity at low-speed feed of the wire electrode 1 is selected depending on the diameter of the wire electrode 1. Once the wire electrode 1 has moved past the lower head 4, there is no possibility of interference with any obstacle anymore and, therefore, the wire-feed rollers 10 are geared up to get the feed of the wire electrode 1 changed into a high speed operation to cut the time required for the feed of the wire electrode 1, cutting hours in cycle time in the wire-cut electrical discharge processor while saving hours of arrangements.

At step S4, after the sensor 20 has found the buckled wire electrode 1, the cylinder 16 is actuated to open the wire-feed rollers 10 to release the wire electrode 1. Then, the wire-feed rollers 10 cease rotation. The wire electrode 1, once out of the wire-feed rollers 10, is allowed to resiliently spring up due to a self-repulsive force of the warp to get the extremity of the wire electrode 1 to move out of the engagement with the obstacle or the contact with the sensor 20. Thereafter, air is blown into the guide tube 8 from above to bottom through the air inlet 22 to vibrate the wire electrode 1 inside the guide tube 8. The vibration is to make sure of the disengagement of the extremity of the wire electrode 1 out of the obstacle (step S8).

In step S9, it is determined whether the try to disengage the extremity of the wire electrode 1 from the obstacle is repeated preselected times over and again. Even if the tries of repeated times below the preselected times fail to get the extremity of the wire electrode 1 out of engagement or abutment against the obstacle, the operation advances to step S10. On the other hand, when the tries above the preselected times can't get the extremity of the wire electrode 1 out of engagement or abutment against the obstacle, it is considered that the extremity of the wire electrode 1 gets ended up in permanent bent or buckle so as hardly thread through the hole in the upper head 2, start hole 33 in the workpiece 3 and the hole in the lower head 4 at a stroke. The operation advances to another step S11 (step S9). At step S10, as the wire electrode 1 couldn't manage to get out of the engagement or abutment against any obstacle including the upper head 3, workpiece 2, and lower head 4, the wire-feed rollers 10 hold the wire electrode 1 between them again for the recurrence of the step S3 to get the wire electrode 1 out of the abutment against any obstacle. Referring back to step S9, after the try to disengage the extremity of the wire electrode 1 from the obstacle has been carried out over the preselected times or more, the extremity of the wire electrode 1 is expected to certainly get worse and, therefore, a command is issued to cut away a predetermined length of the extremity of the wire electrode 1 (step S11). If the number of times of cutting the extremity of the wire electrode 1 is equal or below the preselected times, the operation advances to step S13. The preselected times or more of cutting the extremity of the wire electrode 1, because of considered to suggest that the start hole or kerf in the workpiece 2 might have been incomplete and/or clogged with any other obstacle, results in raising any alarm or suspending the threading of the wire electrode 1 into the preselected hole in the workpiece 1 in preparation for further reforming the currently hole or drilling another start hole and kerf in the workpiece 2 and alternatively, replacing the workpiece 2 with new one (step S12).

With the method of threading the wire electrode according to the present invention, after the sensor 20 has found the buckled wire electrode 1 coming into abutment against the sensor 20 on the way of the threading of the wire electrode 1, the try to disengage the extremity of the wire electrode 1 from the obstacle is carried out over some times preselected as a parameter, for example five times. Where the wire electrode 1 can ' t still be fed with the wire-fed rollers 10 at a low velocity despite of the preselected times of repetition of the try to disengage the extremity of the wire electrode 1 from the obstacle, a command is issued to stop the threading of the wire electrode 1 and then cut away a predetermined length of the extremity of the wire electrode 1 (step S13).

With the command to cut away a limited length of extremity of the wire electrode 1, the guide tube 8 is elevated to its upper limit while the source bobbin is driven in reverse to the feed to wind up the wire electrode 1 to the extent that the new extremity of the wire electrode 1 is detected with a wire-end sensor (not shown) (step S14). Detection of the extremity of the wire electrode 1 by the wire-end sensor gets the source bobbin stopped winding rotation. Then, the cylinder 16 of the wire-feed rollers 10 is actuated to close the wire-feed rollers 10 to hold the wire electrode 1 between them. The guide tube 8 is moved downward over a preselected distance together with the wire electrode 1 caught with the wire-feed rollers 10. Subsequently, the wire-feed rollers 10 is made open to release the wire electrode 1 and the guide tube 8 is moved upwards to its home position, leaving the wire electrode 1 at the lowered position in a way exposing the wire electrode 1 below the lowest end of the guide tube 8 across a length substantially equivalent to the downward moving distance of the wire electrode 1 (step S15). Then, the cutter 13 is actuated to cut away the extremity of the wire electrode 1 exposed below the guide tube 8, the extremity having been damaged because of the repeated tries to disengage the extremity of the wire electrode 1 from the obstacle. Soon before the cutting operation, the cylinder 16 is actuated to close the wire-feed rollers 10 to catch the wire electrode 1 between them while another cylinder is energized to close the common rollers 11 to hold the wire electrode 1 between them. There, the wire electrode 1 caught by both the wire-fed rollers 10 and the common rollers 11 is cut by means of the cutter 13 at a location slightly above the common rollers 11 with the cut scrap being removed by means of wire clamps (step S16). The wire scrap 1 is taken back into a recovery container and the cutting operation finishes (step S17). Thereafter, the operation comes back the step S1 to repeat again the wire-threading method.

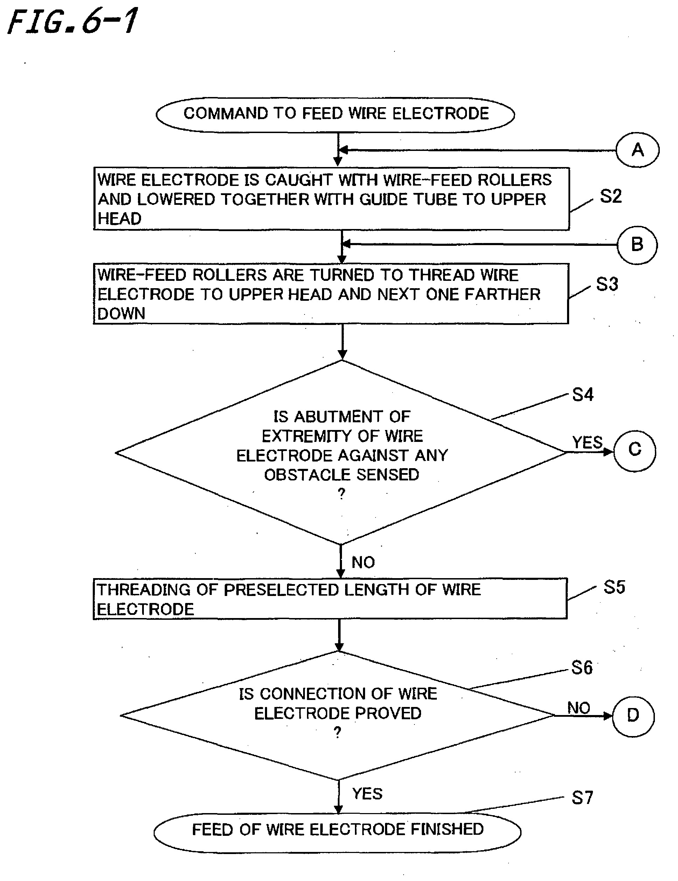

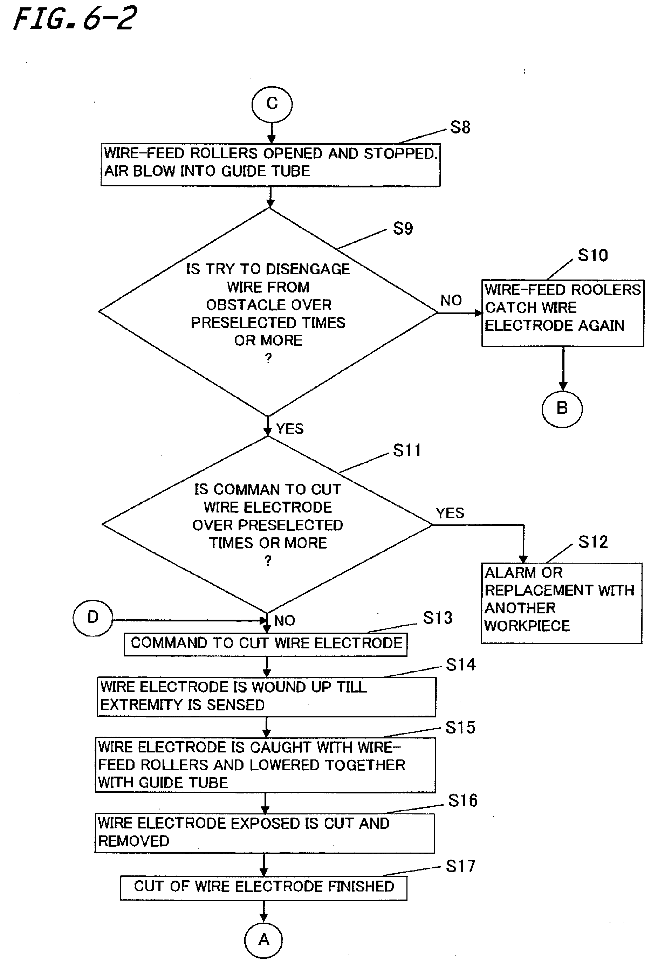

Referring to FIG. 6 (FIG. 6-1 and FIG. 6-2), there is shown a flowchart of a wire electrode-threading operation not in accordance with the present invention, in which the wire electrode 1 experiences no annealing. With this operation, the threading operation of the wire electrode 1 is carried out according to at step S2∼ step S17 other than the annealing of step S1, so that the previous description will be applicable.

## Claims

1. A method of threading a wire electrode in a wire-cut electrical discharge processor, comprising the steps of:
catching a wire electrode (1) unwound from a source bobbin between wire-feed rollers (10),
driving the wire-feed rollers (10) to get the wire electrode (1) to pass past a guide tube (8) through an upper head (3), a workpiece (2) lying below the upper head (3), and a lower head (4) lying below the workpiece (2) in opposition to the upper head (3), and
then feeding automatically the wire electrode (1) through guide members (6,26) downstream of the lower head (4) towards a winding rollers (7) and further a waste hopper;
wherein a sensor (20) installed on an upper end (32) of a guide-tube holder (23) detects any variation in a potential across the wire-feed rollers (10) and the upper end of the guide-tube holder (23), which arise after an extremity annealed over a preselected length of the wire electrode (1) has come into abutment against any obstacle including the upper head (3), workpiece (2) and the lower head (4), with the result that the wire electrode (1) has come into contact with the upper end (32),
the wire-feed rollers (10) get open to release the wire electrode (1) to make the wire electrode (1) free of the obstacle in response to the sensor (20) having detected the abutment of the wire electrode (1) against the obstacle,
the wire-feed rollers (10) do the automatic feed of the wire electrode (1) over preselected times to try disengaging the extremity of the wire electrode (1) out of the obstacle, the wire electrode (1) is cut away over a predetermined length of the extremity of the wire electrode (1) after the try to disengage the extremity of the wire electrode (1) from the obstacle has been carried out over the preselected times or more,
thereafter, the wire-feed rollers (10) are driven in a revolving direction opposite to a wire-electrode feed direction over a preselected length inclusive of the extremity of the wire electrode (1) with applying a tensile force on the wire electrode (1) and meanwhile an electric current is fed between feeder elements (17) on the wire-feed rollers (10) and feeder elements (18) on common rollers (11) to anneal the wire electrode (1) between the feeder elements (17) and the feeder elements (18), and then the annealed wire electrode (1) is cooled with an air flow blown into the guide tube (8) via an air inlet (22) thereof to get free of permanent curl to ensure a straightness of the wire electrode (1),
wherein the wire electrode (1) is caught by the wire-feed rollers (10) and the common rollers (11) and cut at a location above the common rollers (11) with a cut scrap of the wire electrode (1) being removed,
subsequently, the wire-feed rollers (10), after having caught the wire electrode (1) with a new annealed extremity again, are actuated to resume a new automatic threading of the wire electrode (1), and then the automatic feed of the wire electrode (1) is executed after the automatic threading of the wire electrode (1) with the new extremity has been carried out over a preselected times, contrarily, when the new extremity of the wire electrode (1) couldn't still manage to get rid of the abutment against the obstacle in spite of repetition of the automatic wire feed has done over the preselected times, from then on, further automatic feed of the wire electrode (1) into the workpiece (2) to make a predetermined processing shape is skipped and instead the automatic feed of the wire electrode (1) is directed to any other predetermined processing shape in the same workpiece (2) or any other workpiece (2).

2. A method of threading a wire electrode, as set forth in claim 1, wherein when the wire electrode (1) couldn't still manage to get rid of the abutment against the obstacle after the automatic feed of the wire electrode (1) with the new extremity have been carried out over a preselected times, the automatic feed of the wire electrode (1) gets stopped and then an alarm issues.

3. A method of threading a wire electrode, as set forth in claim 2, wherein the alarm is transmitted from a computer in the wire-cut electrical discharge processor to a personal computer and/or a cell phone.

## Patentansprüche

1. Verfahren zum Einfädeln einer Drahtelektrode in eine Drahterodiermaschine, umfassend die Schritte:
Fassen einer Drahtelektrode (1), die von einer Versorgungsspule abgewickelt wird, zwischen Drahtzufuhrrollen (10),
Antreiben der Drahtzufuhrrollen (10), um die Drahtelektrode (1) vorbei an einem Führungsrohr (8) durch ein oberes Kopfteil (3), ein Werkstück (2), das unterhalb des oberen Kopfteils (3) liegt, und ein unteres Kopfteil (4), das unterhalb des Werkstücks (2) gegenüber dem oberen Kopfteil (3) liegt, zu leiten, und
dann automatisches Zuführen der Drahtelektrode (1) durch Führungsbauteile (6, 26) nach dem unteren Kopfteil (4) in Richtung einer Wickelrolle (7) und ferner einem Abfallbehälter;
wobei ein Sensor (20), der an einem oberen Ende (32) eines Führungsrohrhalters (23) installiert ist, jegliche Veränderung in Bezug auf das Potenzial über den Drahtzufuhrrollen (10) und dem oberen Ende des Führungsrohrhalters (23) detektiert, das auftritt, nachdem das äußerste Ende, das über eine zuvor gewählte Länge der Drahtelektrode (1) ausgeglüht wurde, an irgendein Hindernis, einschließlich das obere Kopfteil (3), das Werkstück (2) und das untere Kopfstück (4), angestoßen ist, mit dem Ergebnis, dass die Drahtelektrode (1) mit dem oberen Ende (32) in Kontakt gekommen ist,
sich die Drahtzufuhrrollen (10) öffnen, um die Drahtelektrode (1) freizugeben, um die Drahtelektrode (1) in Reaktion auf den Sensor (20), der das Anstoßen der Drahtelektrode (1) an das Hindernis detektiert hat, von dem Hindernis zu befreien,
die Drahtzufuhrrollen (10) das automatische Zuführen der Drahtelektrode (1) über zuvor gewählte Zeiträume vornehmen, um zu versuchen, das äußerste Ende der Drahtelektrode (1) aus dem Hindernis zu lösen, die Drahtelektrode (1) über eine vorbestimmte Länge des äußersten Endes der Drahtelektrode (1) weggeschnitten wird, nachdem der Versuch, das äußerste Ende der Drahtelektrode (1) von dem Hindernis zu lösen, über die zuvor bestimmten Zeiträume oder mehr durchgeführt worden ist,
danach die Drahtzufuhrrollen (10) in einer Drehrichtung entgegen einer Drahtelektrodenzufuhrrichtung über eine zuvor gewählte Länge, das äußerste Ende der Drahtelektrode (1) eingeschlossen, angetrieben werden, indem eine Zugkraft auf die Drahtelektrode (1) ausgeübt wird und inzwischen ein elektrischer Strom zwischen Speisungselementen (17) an den Drahtzufuhrrollen (10) und Speisungselementen (18) an den gewöhnlichen Rollen (11) angelegt wird, wodurch die Drahtelektrode (1) zwischen den Speisungselementen (17) und den Speisungselementen (18) ausglüht und dann die ausgeglühte Drahtelektrode (1) mit einem Luftstrom gekühlt wird, der in das Führungsrohr (8) über einen Lufteinlass (22) darin geblasen wird, um dauerhaftes Kräuseln zu verhindern, um sicherzustellen, dass die Drahtelektrode (1) gerade ist,
wobei die Drahtelektrode (1) von den Drahtzufuhrrollen (10) und den gewöhnlichen Rollen (11) gefasst und an einer Stelle über den gewöhnlichen Rollen (11) geschnitten wird, wobei ein Schnittrest der Drahtelektrode (1) entfernt wird,
anschließend die Drahtzufuhrrollen (10), nachdem sie die Drahtelektrode (1) mit einem neu ausgeglühten äußeren Ende wieder gefasst haben, in Betrieb gesetzt werden, um wieder mit dem neuen automatischen Einfädeln der Drahtelektrode (1) zu beginnen, und dann das automatische Zuführen der Drahtelektrode (1) ausgeführt wird, nachdem das automatische Einfädeln der Drahtelektrode (1) mit dem neuen äußeren Ende über zuvor gewählte Zeiträume durchgeführt worden ist, wobei andererseits, wenn das Anstoßen des neuen äußeren Endes der Drahtelektrode (1) an das Hindernis nicht mehr beseitigt werden kann, obgleich die automatische Drahtzufuhr über die zuvor gewählten Zeiträume wiederholt worden ist, von da an das weitere automatische Zuführen der Drahtelektrode (1) in das Werkstück (2) zur Schaffung einer vorbestimmen Verarbeitungsform übersprungen und statt dessen das automatische Zuführen der Drahtelektrode (1) auf irgendeine andere vorbestimmte Verarbeitungsform in demselben Werkstück (2) oder irgendeinem anderen Werkstück (2) gerichtet wird.

2. Verfahren zum Einfädeln einer Drahtelektrode, wie in Anspruch 1 dargelegt, wobei, wenn das Anstoßen der Drahtelektrode (1) an das Hindernis nicht mehr beseitigt werden kann, nachdem das automatische Zuführen der Drahtelektrode (1) mit dem neuen äußeren Ende über zuvor gewählte Zeiträume durchgeführt worden ist, das automatische Zuführen der Drahtelektrode (1) gestoppt und dann ein Alarm ausgegeben wird.

3. Verfahren zum Einfädeln einer Drahtelektrode, wie in Anspruch 2 dargelegt, wobei der Alarm von einem Computer in der Drahterodiermaschine auf einen Personalcomputer und/oder ein Mobiltelefon übertragen wird.

## Revendications

1. Un procédé pour l'enfilage d'une électrode en fil dans un processeur d'usinage par électroérosion à fil, comprenant les étapes de :
attraper une électrode en fil (1) déroulée d'une bobine source entre des rouleaux d'alimentation en fil (10),
entraîner les rouleaux d'alimentation en fil (10) pour faire passer l'électrode en fil (1) au-delà d'un tube de guidage (8) au travers d'une tête supérieure (3), une pièce à usiner (2) étant située au-dessous de la tête supérieure (3), et une tête inférieure (4) étant située au-dessous de la pièce à usiner (2) en opposition à la tête supérieure (3), et
alors alimenter automatiquement l'électrode en fil (1) au travers d'éléments de guidage (6, 26) en aval de la tête inférieure (4) vers des rouleaux d'enroulement (7) et continuer vers une trémie à déchets ;
dans lequel un capteur (20) installé sur une extrémité supérieure (32) d'un support de tube de guidage (23) détecte toute variation dans un potentiel entre les rouleaux d'alimentation en fil (10) et l'extrémité supérieure du support de tube de guidage (23), qui provient après qu'une extrémité recuite sur une longueur présélectionnée de l'électrode en fil (1) est venue en butée contre un obstacle quelconque y-compris la tête supérieure (3), la pièce à usiner (2) et la tête inférieure (4) de sorte que l'électrode en fil (1) est entrée en contact avec l'extrémité supérieure (32),
les rouleaux d'alimentation en fil (10) s'ouvrent pour relâcher l'électrode en fil (1) pour libérer l'électrode en fil (1) de l'obstacle en réponse au capteur (20) ayant détecté la butée de l'électrode en fil (1) contre l'obstacle,
les rouleaux d'alimentation en fil (10) alimentent automatiquement l'électrode en fil (1) pendant des durées présélectionnées pour essayer de dégager l'extrémité de l'électrode en fil (1) de l'obstacle, l'électrode en fil (1) est coupée sur une longueur prédéterminée de l'extrémité de l'électrode en fil (1) après que la tentative de dégagement de l'extrémité de l'électrode en fil (1) de l'obstacle a été effectuée pendant les durées prédéterminées ou plus,
ensuite, les rouleaux d'alimentation en fil (10) sont entraînés dans un sens de rotation opposé à un sens d'alimentation d'électrode en fil sur une longueur présélectionnée incluant l'extrémité de l'électrode en fil (1) en appliquant une force de traction sur l'électrode en fil (1) et entre-temps un courant électrique est alimenté entre les éléments d'alimentation (17) sur les rouleaux d'alimentation en fil (10) et les éléments d'alimentation (18) sur des rouleaux communs (11) pour recuire l'électrode en fil (1) entre les éléments d'alimentation (17) et les éléments d'alimentation (18), et l'électrode en fil (1) recuite est alors refroidie par un flux d'air soufflé dans le tube de guidage (8) via une entrée d'air (22) de celui-ci pour se débarrasser du gondolement permanent pour assurer une rectitude de l'électrode en fil (1),
dans lequel l'électrode en fil (1) est attrapée par les rouleaux d'alimentation en fil (10) et les rouleaux communs (11) et coupée à une location au-dessus des rouleaux communs (11) et une chute coupée de l'électrode en fil (1) est enlevée,
par la suite, les rouleaux d'alimentation en fil (10), après avoir attrapé à nouveau l'électrode en fil (1) avec une nouvelle extrémité recuite, sont actionnés pour recommencer un nouvel enfilage automatique de l'électrode en fil (1), et alors l'alimentation automatique de l'électrode en fil (1) est exécutée après que l'enfilage automatique de l'électrode en fil (1) avec une nouvelle extrémité a été accompli pendant des durées présélectionnées, contrairement, quand la nouvelle extrémité de l'électrode en fil (1) n'est toujours pas parvenue à se débarrasser de la butée contre l'obstacle en dépit de répétitions que l'alimentation en fil automatique a effectuées pendant les durées présélectionnées, à partir de ce moment-là, toute autre alimentation automatique de l'électrode en fil (1) dans la pièce à usiner (2) pour faire une forme de traitement prédéterminée est omise et au lieu de cela l'alimentation automatique de l'électrode en fil (1) est dirigée vers une autre quelconque forme de traitement prédéterminée dans la même pièce à usiner (2) ou toute autre pièce à usiner (2).

2. Un procédé pour l'enfilage d'une électrode en fil, selon la revendication 1, dans lequel lorsque l'électrode en fil (1) n'a toujours pas réussi à se débarrasser de la butée contre l'obstacle après que l'alimentation automatique de l'électrode en fil (1) avec la nouvelle extrémité a été effectuée pendant des durées prédéterminées, l'alimentation automatique de l'électrode en fil (1) est arrêtée et alors une alarme se déclenche.

3. Un procédé pour l'enfilage d'une électrode en fil, selon la revendication 2, dans lequel l'alarme est transmise d'un ordinateur dans le processeur d'usinage par électroérosion à fil à un ordinateur personnel et/ou un téléphone portable.
